## Europäisches Patentamt
## European Patent Office
## Office européen des brevets

(19)

(11) Numéro de publication : **0 131 488**
**B1**

(12) **FASCICULE DE BREVET EUROPÉEN**

(45) Date de publication du fascicule du brevet :
10.02.88

(51) Int. Cl.⁴ : **G 02 B 6/24**

(21) Numéro de dépôt : **84401165.0**

(22) Date de dépôt : **06.06.84**

(54) **Connecteur optique, procédé de fabrication dudit connecteur et connexions fibres-fibres et diodes-fibres réalisées avec ce connecteur.**

(30) Priorité : **08.06.83 FR 8309511**

(43) Date de publication de la demande :
**16.01.85 Bulletin 85/03**

(45) Mention de la délivrance du brevet :
**10.02.88 Bulletin 88/06**

(84) Etats contractants désignés :
**DE GB NL**

(56) Documents cités :
**EP-A- 0 063 085**
**DE-A- 3 042 609**
**JP-A-54 163 046**
**US-A- 3 954 338**
**US-A- 4 101 197**
**INSTITUTE OF ELECTRONICS AND COMMUNICA-TION ENGINEERS OF JAPAN.INTERNATIONAL CONFERENCE ON INTEGRATED OPTICS AND OPTI-CAL FIBER COMMUNICATION 1977, TECHNICAL DIGEST, 18-20 juillet 1977 (TOKYO, JP) N. SUZUKI et al.: "A new demountable connector developed for a trial optical transmission system", pages351-354**
**PATENTS ABSTRACTS OF JAPAN, volume 1, no. 156, 13 décembre 1977, page 8565E77**

(73) Titulaire : **COMMISSARIAT A L'ENERGIE ATOMIQUE**
**31/33, rue de la Fédération**
**F-75015 Paris (FR)**

(72) Inventeur : **Kling, Bernard**
**22, rue de l'Ormeteau**
**F-91790 Boissy Saint Yon (FR)**
Inventeur : **Mongin, Roger**
**9, rue Rondelet**
**F-75012 Paris (FR)**
Inventeur : **Leguennec, Michel**
**8, rue Lucien Leuwen**
**F-75020 Paris (FR)**

(74) Mandataire : **Mongrédien, André et al**
**c/o BREVATOME 25, rue de Ponthieu**
**F-75008 Paris (FR)**

Jouve, 18, rue St-Denis, 75001 Paris, France

EP 0 131 488 B1

## Description

La présente invention concerne un procédé de fabrication d'un connecteur optique et des procédés d'obtention de connexions fibres-fibres et diodes-fibres à l'aide d'un tel connecteur. Elle s'applique donc notamment à la réalisation de connexions entre des fibres optiques ou entre de telles fibres et des émetteurs ou des récepteurs de lumière.

On sait qu'une fibre optique se compose dans la plupart des cas d'un coeur et d'une gaine entourant ce coeur et ayant un indice optique inférieur à l'indice optique du cœur, ce dernier et la gaine étant par exemple réalisés à partir de silice. Dans certains cas, la fibre optique ne comporte pas de gaine et se confond alors avec son cœur. Différentes gaines de protection, par exemple en matière plastique, peuvent entourer la fibre optique comme on le verra par la suite.

On connaît des connecteurs optiques permettant de réaliser une liaison entre deux fibres optiques de façon à pouvoir faire passer de la lumière d'une fibre a l'autre et l'on sait qu'une mauvaise coaxialité des coeurs des deux fibres peut poser un problème de perte d'insertion de lumière d'une fibre dans l'autre.

La présente invention a pour but de résoudre ce problème en proposant un procédé de fabrication d'un connecteur optique permettant de réaliser de bonnes connexions optiques dans lesquelles les coeurs des fibres connectées présentent une parfaite coaxialité.

On connaît déjà, par l'article de N. Suzuki et al., publié dans le « Technical Digest » de « International Conference on Integrated Optics and Optical Fiber Communication », 1977, p. 351 à 354, un procédé de fabrication d'un connecteur optique, selon lequel une fibre optique est collée dans un tube en verre, ce tube étant lui-même collé dans un tube en acier. Le centrage du tube en acier dans un embout est alors réalisé de la façon suivante : un embout-test dont l'extrémité est pourvue d'une marque, est placé dans un Vé d'appui. On observe cette extrémité au moyen d'une caméra de télévision reliée à un récepteur et munie d'un objectif de microscope. On déplace l'embout-test de façon que, par rotation, la marque décrive un cercle concentrique à un cercle-cible situé sur l'écran du récepteur. On remplace alors l'embout-test par l'embout muni de la fibre optique, on fait coïncider l'image de l'extrémité de celle-ci avec le centre du cercle-cible et on colle le tube en acier dans l'embout.

La présente invention a tout d'abord pour objet un procédé de fabrication d'un connecteur optique, ce connecteur comprenant :

une fibre optique pourvue d'un cœur,

un embout qui est destiné à contenir l'extrémité de connexion de la fibre et dont la surface externe épouse la forme d'un cylindre de révolution ayant ainsi un axe de symétrie, et

un ensemble mécanique de connexion,

ce procédé consistant :

à mettre en coïncidence l'extrémité de connexion du coeur de la fibre optique avec ledit axe de symétrie du cylindre, en contrôlant optiquement cette mise en coïncidence, puis

à immobiliser l'extrémité de connexion du cœur par rapport à l'embout,

à polir les extrémités actives de l'embout et de la fibre et à rendre solidaires l'un de l'autre l'embout et l'ensemble mécanique de connexion, ce dernier ayant préalablement été mis en place, procédé caractérisé en ce que l'embout est muni de moyens de déplacement et d'immobilisation de l'extrémité de connexion de la fibre optique à l'intérieur dudit embout et en ce que la mise en coïncidence est effectuée en disposant l'embout dans un Vé d'appui, en injectant de la lumière dans le cœur de la fibre optique par l'autre extrémité de celle-ci tout en faisant tourner l'embout dans le Vé d'appui, l'extrémité active du coeur de la fibre optique décrivant alors un cercle centré sur l'axe du cylindre, et en déplaçant l'extrémité de connexion de la fibre optique à l'intérieur de l'embout, jusqu'à annuler le rayon dudit cercle.

Par « extrémité de connexion de la fibre optique » (respectivement « du cœur de la fibre optique »), on entend l'extrémité de la fibre (respectivement du coeur de la fibre) destinée à être connectée à l'extrémité d'une autre fibre (respectivement du cœur d'une autre fibre) ou connectée à un émetteur ou à un récepteur de lumière.

Par « extrémité active de l'embout » (respectivement « de la fibre », « du coeur de la fibre »), on entend la surface de l'embout (respectivement de la fibre, du coeur de la fibre) de laquelle est issue ou à laquelle parvient la lumière dans une connexion. Dans le procédé objet de l'invention, les extrémités actives de l'embout et de la fibre sont polies, d'une façon très précise de préférence, de façon à ne former qu'une même surface plane.

Par « annuler le rayon du cercle », on entend : rendre ce rayon inférieur à une valeur donnée. En d'autres termes, on se fixe une certaine tolérance pour le rayon du cercle : on accepte tout connecteur pour lequel ce rayon est inférieur à une certaine valeur par exemple égale à un micron.

Selon une réalisation préférée de l'invention, l'extrémité de connexion de la fibre optique est immobilisée dans un tube rigide de protection avant d'être introduite dans l'embout, et le déplacement et l'immobilisation de ladite extrémité de connexion de la fibre optique dans l'embout sont effectués par l'intermédiaire du tube rigide de protection.

selon une réalisation particulière de l'invention, les moyens de déplacement et d'immobilisation sont des vis de réglage aptes à serrer ce tube rigide de protection suivant un pourtour de celui-ci.

Les connecteurs obtenus selon la présente invention permettent donc de réaliser de bonnes connexions optiques : il suffit en effet de rendre coaxiaux les embouts de deux connecteurs obtenus selon l'invention, disposés en regard l'un de l'autre, pour rendre parfaitement coaxiaux les cœurs des fibres desdits connecteurs.

L'invention concerne aussi un procédé d'obtention d'une connexion biunivoque entre N fibres optiques et N autres fibres optiques, N étant un nombre entier au moins égal à un, ladite connexion comprenant un premier groupe de N connecteurs optiques, un second groupe de N connecteurs optiques et des moyens de raccord deux à deux des connecteurs du premier groupe aux connecteurs du second groupe, de façon à former N paires de connecteurs, procédé caractérisé en ce que l'on fabrique les connecteurs conformément au procédé de l'invention et de telle manière que pour chaque paire, les embouts des deux connecteurs appariés soient identiques et aient des extrémités actives complémentaires l'une de l'autre, et en ce que les moyens de raccord comportent un noyau de centrage pourvu de N trous calibrés, chaque trou calibré étant ajusté aux embouts des deux connecteurs de l'une desdites paires et recevant ces embouts, ces derniers étant disposés dans ledit trou calibré de façon que leurs extrémités actives soient au contact l'une de l'autre, afin de pouvoir faire passer de la lumière d'un connecteur à l'autre.

Par « extrémités actives complémentaires l'une et l'autre », on entend des extrémités actives planes, qui sont en outre parallèles l'une à l'autre lorsque les embouts des deux connecteurs sont disposés en regard l'un de l'autre et rendus coaxiaux.

Le nombre N peut être égal à un, la connexion étant alors appelée « monovoie ». Le nombre N peut également être supérieur à un, la connexion étant alors appelée « multivoie ».

Bien entendu, les embouts des connecteurs appartenant à deux paires distinctes peuvent être différents ou, dans une réalisation particulière plus simple, on peut utiliser 2N connecteurs tous identiques les uns aux autres, les N trous calibrés étant alors identiques les uns aux autres.

L'invention concerne enfin un procédé d'obtention d'une connexion entre au moins une diode et au moins une fibre optique, ladite connexion comprenant au moins un connecteur optique et des moyens de raccord de la diode et du connecteur, procédé caractérisé en ce que l'on fabrique le connecteur conformément au procédé selon l'invention et en ce que les moyens de raccord de la diode et du connecteur comportent un noyau de centrage pourvu d'au moins une paire de logements coaxiaux débouchant sur l'extérieur du noyau de centrage, disposés en regard l'un de l'autre et communiquant l'un avec l'autre, l'un des deux logements étant calibré et recevant l'embout du connecteur, l'autre logement recevant la diode, l'embout et la diode étant disposés dans leurs logements respectifs de façon que leurs extrémités actives soient en regard l'une de l'autre, afin de pouvoir réaliser un échange de lumière entre la diode et la fibre optique du connecteur.

La diode peut être une diode émettrice de lumière, par exemple une diode électroluminescente ou une diode laser, destinée à injecter de la lumière dans la fibre optique. Par « extrémité active de la diode », on entend alors la surface de cette diode destinée à émettre la lumière.

La diode peut également consister en une diode réceptrice de lumière, par exemple une photodiode PIN, destinée à recevoir la lumière émise par la fibre optique. Par « extrémité active de la diode », on entend alors la surface de cette diode destinée à recevoir la lumière émise par la fibre.

L'invention sera mieux comprise à la lecture de la description qui suit, d'exemples de réalisation donnés à titre indicatif et non limitatif, en référence aux dessins annexés, sur lesquels :

la figure 1 est une vue schématique d'un mode de réalisation particulier d'un connecteur optique réalisé selon l'invention,

la figure 2 est une vue schématique d'une installation permettant de contrôler optiquement la mise en coïncidence de l'extrémité de connexion du cœur de la fibre optique que comporte ce connecteur, avec ledit axe de symétrie du cylindre dont la surface externe de l'embout du connecteur épouse la forme,

la figure 3 est une vue schématique d'un mode de réalisation particulier des moyens de raccord permettant de réaliser une connexion monovoie selon l'invention,

la figure 4 est une vue schématique d'un mode de réalisation particulier des moyens de raccord qui permettent de réaliser une connexion multivoie selon l'invention, et

la figure 5 est une vue schématique d'un mode de réalisation particulier d'une connexion entre une diode et une fibre optique, selon l'invention.

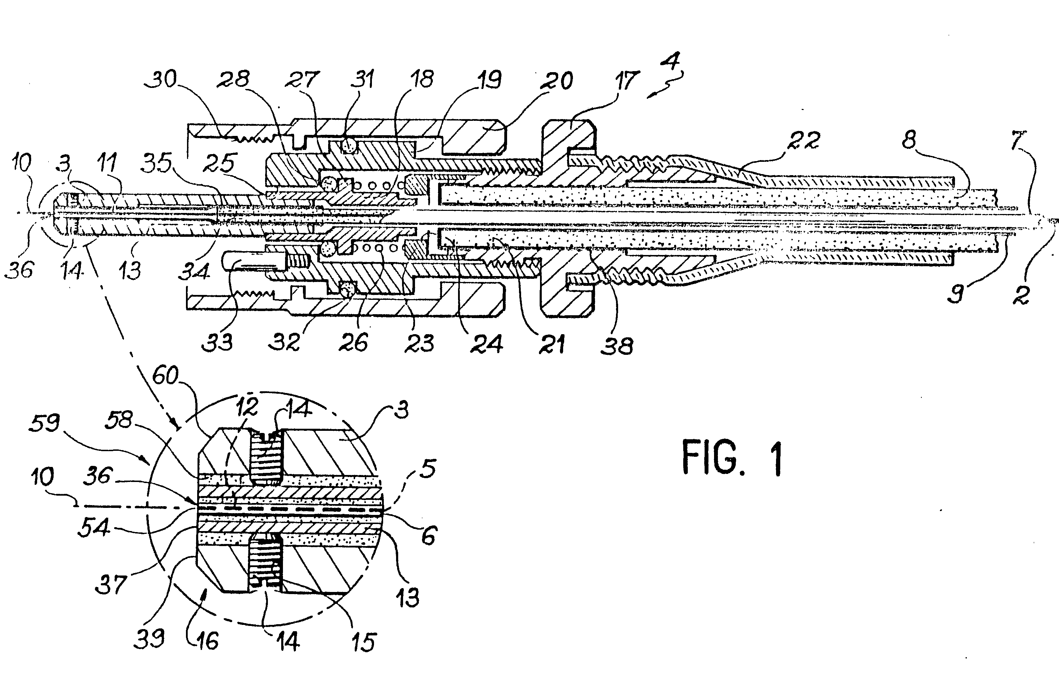

Sur la figure 1, on a représenté schématiquement un mode de réalisation particulier du connecteur optique réalisé selon l'invention. Il comprend essentiellement une fibre optique 2, un embout 3 et un ensemble mécanique de connexion 4.

La fibre optique 2 comprend un cœur 5 entouré par une gaine 6. Cette dernière est elle-même prise dans une gaine 7 dite « gaine intérieure », faite par exemple en une matière plastique. La gaine intérieure 7 est entourée par une autre gaine 8, dite « gaine extérieure », qui est également en matière plastique par exemple. La gaine intérieure 7 présente un certain jeu axial par rapport à la gaine extérieure 8. Celle-ci est renforcée par des fils 9 appelés « porteurs », destinés à empêcher son allongement et donc la cassure de la fibre optique 2 lorsque les extrémités de celle-ci sont rendues rigidement solidaires de la gaine extérieure 8. Ces porteurs 9 sont noyés dans la matière plastique constituant la gaine extérieure 8 et situés au voisinage de la surface interne de cette dernière.

L'embout 3 est par exemple en acier. Sa surface externe épouse la forme d'un cylindre de révolution dont l'axe, appelé « axe de l'embout » par la suite, porte la référence 10 sur la figure 1. L'extrémité 11 de connexion de la fibre optique 2 est immobilisée dans l'embout 3 de façon que l'extrémité 12 de connexion du cœur 5 de la fibre optique 2 coïncide avec l'axe 10 de l'embout 3. A cet effet, l'extrémité 11 de connexion de la fibre optique 2 est préalablement dénudée et fixée dans un tube rigide 13 de protection, par exemple métallique, prévu pour la tenue mécanique de la fibre et lui-même immobilisé définitivement dans l'embout 3 après y avoir été correctement positionné grâce à des moyens 14 de déplacement et d'immobilisation dont est pourvu l'embout 3. Ces moyens 14 de déplacement et d'immobilisation sont par exemple constitués par des vis de réglage aptes à serrer le tube rigide 13 de protection suivant un pourtour de celui-ci et régulièrement répartis par rapport audit pourtour. A titre indicatif et non limitatif les vis de réglage ont une longueur de 1 mm et un diamètre de 1 mm.

Ces vis de réglage 14 sont par exemple au nombre de quatre. Elles sont prévues pour être vissées respectivement dans quatre trous taraudés 15 qui sont pratiqués à l'extrémité 16 de l'embout 3 prévue pour la connexion optique, et qui sont respectivement orientés suivant quatre rayons concourants dudit cylindre, à 90° les uns des autres. Sur la figure 1, on a seulement représenté deux vis de réglage 14 situées dans le plan de la figure 1. Les deux autres vis de réglage 14 sont bien entendu situées dans un plan perpendiculaire à celui de la figure 1 et contenant l'axe 10 de l'embout 3. Par ailleurs, le tube rigide 13 est par exemple réalisé à l'aide d'un alliage de nickel et de cuivre commercialisé sous le nom de Monel.

L'ensemble mécanique 4 de connexion comporte essentiellement un embout 17 de gaine, un porte-embout 18, un boîtier 19 et un corps d'accrochage 20 qui sont des pièces creuses présentant une symétrie de révolution, à l'exception de l'une des deux extrémités du porte-embout 18.

La gaine extérieure 8 est interrompue pour laisser apparaître la gaine intérieure 7 qui est elle-même emprisonnée dans le tube rigide 13 dont une extrémité est évasée à cet effet. L'embout 17 de gaine emprisonne l'extrémité 21 de la gaine extérieure 8, extrémité en laquelle cette gaine extérieure est interrompue. L'embout 17 de gaine est fileté à ses deux extrémités. L'une de celles-ci est emprisonnée par une gaine thermo-rétractable 22 préalablement passée sur la gaine extérieure 8. L'autre extrémité de l'embout 17 de gaine est prolongée par une rondelle 23 comportant une ouverture centrale 24 de section carrée que traverse la gaine intérieure 7. Le boîtier 19 est vissé à l'une de ses extrémités sur ladite autre extrémité de l'embout 17 de gaine et s'étend au-delà de la rondelle 23. L'autre extrémité du boîtier 19 comporte une ouverture centrale 25. Le porte-embout 18 est contenu à l'intérieur du boîtier 19 et traversé par la gaine intérieure 7. L'une des extrémités du porte-embout 18 est mobile dans l'ouverture centrale 25 du boîtier 19. L'autre extrémité du porte-embout 18 présente une section carrée, prévue pour être mobile en translation dans l'ouverture centrale 24 de la rondelle 23. L'extrémité de l'embout 3, opposée à celle qui porte les vis 14, est fixée dans celle des extrémités du porte-embout 18 qui est mobile dans l'ouverture centrale 25 du boîtier 19. Un ressort de rappel 26 entoure le porte-embout 18 et se trouve pris entre un côté d'un bossage annulaire 27 dudit porte-embout et la rondelle 23. Un anneau élastique 28 est situé de l'autre côté du bossage annulaire 27. Cet anneau élastique 28 sert de joint d'étanchéité lorsque le connecteur n'est pas en connexion.

On obtient ainsi un ensemble présentant globalement une symétrie de révolution autour de l'axe 10 de l'embout 3.

Le corps d'accrochage 20 entoure le boîtier 19 et peut se déplacer en translation suivant l'axe 10. L'une des extrémités de ce corps d'accrochage 20 comporte un filetage intérieur 30 permettant de réaliser les connexions selon l'invention, connexions dont il sera question par la suite. Un joint torique 31 d'étanchéité est disposé dans une gorge annulaire 32 pratiquée sur le pourtour du boîtier 19, et vient frotter contre le corps d'accrochage 20. L'embout 3 est donc mobile en translation suivant son axe 10, par rapport au boîtier 19 et se trouve rappelé à sa position initiale grâce au ressort 26 lorsqu'il en a été écarté. Enfin, un téton 33, destiné à servir de détrompeur dans les connexions selon l'invention, est fixé à l'extrémité du boîtier 19, extrémité qui comporte l'ouverture centrale 25.

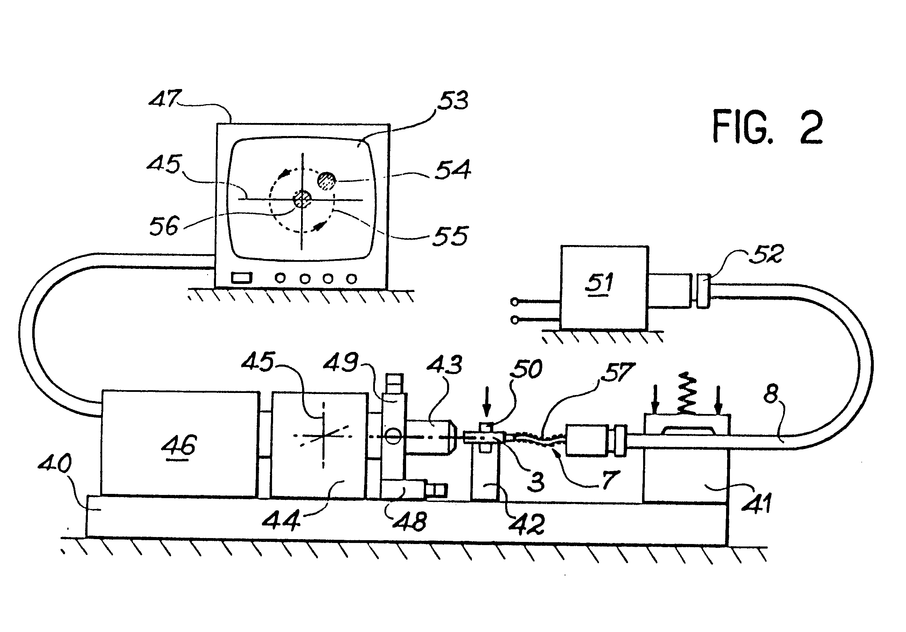

Le procédé objet de l'invention, qui permet de réaliser des connecteurs du genre de celui qui est représenté sur la figure 1, va maintenant être expliqué en référence à cette figure 1 et à la figure 2.

Pour réaliser le connecteur optique représenté sur la figure 1, on commence par préparer la fibre optique 2 associée à la gaine intérieure 7 et à la gaine extérieure 8. La fibre optique 2 a par exemple un diamètre de 125 microns et son coeur, un diamètre de 50 microns. L'extrémité de la gaine extérieure 8 est enlevée, en préservant les porteurs 9, de façon à faire apparaître la gaine intérieure 7. L'extrémité de cette dernière est ensuite enlevée de façon à faire apparaître l'extrémité 11 de connexion de la fibre optique 2. On colle alors l'extrémité 11 de connexion dans le tube rigide 13 dont le diamètre intérieur est par exemple de l'ordre de 200 microns. Pour ce faire, on utilise par exemple une colle vendue sous la marque ARALDITE et la référence AY 103, associée à un durcisseur de référence HY 930. Le mélange colle-durcisseur est par exemple injecté dans le tube rigide 13 à l'aide d'une seringue. On précise que la fibre optique 2 est introduite dans ce tube rigide 13 jusqu'à ce qu'elle en dépasse de quelques millimètres, par exemple 5 mm. La nouvelle extrémité 34 de la gaine intérieure 7 est également collée dans ce tube rigide 13 qui se termine par un évasement 35 prévu à cet effet. On laisse la colle se polymériser, par exemple pendant 24 heures à température ambiante. On peut également accélérer le processus de polymérisation dans une étuve.

Après avoir coupé l'extrémité de la fibre optique dépassant du tube rigide 13, on pratique un pré-polissage de l'extrémité active 36 de la fibre 2 et de l'extrémité 37 du tube rigide 13 entourant cette extrémité active 36. A titre indicàtif mais non limitatif, le pré-polissage est d'abord effectué sur un papier abrasif à grains fins (par exemple du papier n° 1 000 selon les références françaises), puis sur un tissu sur la surface duquel on projette des grains de diamant dont la taille est de l'ordre de 1 micron. Une fois polies, l'extrémité active 36 de la fibre optique et l'extrémité 37 du tube rigide sont contrôlées optiquement, à l'aide d'une loupe par exemple, puis soigneusement nettoyées.

On passe ensuite, sur la gaine extérieure 8, la gaine thermo-rétractable 22 puis l'ensemble mécanique de connexion 4, après avoir pris soin de retourner les porteurs 9. La partie de ces derniers qui est retournée porte la référence 38 sur la figure 1. Bien entendu, l'ensemble mécanique de connexion 4 est complètement assemblé avant d'être mis en place sur la gaine extérieure 8.

L'embout 3 est alors monté sur le tube rigide 13 et ce dernier est amené en coïncidence avec l'axe 10 de l'embout 3, à l'aide des vis de réglage 14, ceci étant contrôlé visuellement, après quoi l'extrémité polie 37 du tube rigide 13 est amenée dans le plan de l'extrémité active 39 de l'embout 3 en appuyant sur le tube rigide 13. Bien entendu, le serrage des vis de réglage 14 est suffisamment faible pour ne pas empêcher le déplacement du tube 13 lorsque l'on appuie sur ce dernier.

On procède alors à la mise en coïncidence de l'extrémité 12 de connexion du coeur 5 avec l'axe 10 de l'embout 3, mise en coïncidence qui est contrôlée optiquement à l'aide de l'installation représentée schématiquement sur la figure 2.

Cette installation comporte successivement, sur un banc optique 40 horizontal, des moyens 41 de serrage de la gaine extérieure 8, un Vé d'appui 42 pour l'embout 3, un objectif de microscope 43, un conduit optique 44 pourvu d'une mire de réglage 45 centrée sur l'axe optique de l'objectif de microscope et perpendiculaire à cet axe optique, et une caméra de télévision 46 reliée à un récepteur de télévision 47. Ce dernier permet d'observer l'image d'un objet placé devant l'objectif 43, image qui est grossie par celui-ci et transmise à la caméra 46 par l'intermédiaire du conduit 44. L'axe optique de l'objectif de microscope 43 est horizontal. Cet objectif de microscope 43 est associé à des moyens 48 de réglage de mise au point, ces moyens consistant en des moyens de translation de l'objectif selon une direction parallèle à son axe optique. L'objectif de microscope 43 est également associé à des moyens 49 de réglage de sa position, ces moyens de réglage consistant en des moyens de déplacement de l'objectif parallèlement à un plan vertical.

La gaine extérieure 8 est alors immobilisée par ses moyens de serrage 41. L'ensemble mécanique de connexion 4 étant maintenu en butée sur la gaine extérieure 8, on tire hors de cette dernière une partie de la gaine intérieure 7 en contact avec l'embout 3, d'une longueur suffisante pour positionner cet embout 3 au fond de son Vé d'appui 42, en le maintenant dans cette position grâce à des moyens de pression 50, l'extrémité active de l'embout 3 étant alors bien entendu en regard de l'objectif de microscope 43.

A l'aide d'une source lumineuse 51, on injecte de la lumière dans le coeur de la fibre optique par l'autre extrémité de celle-ci, cette autre extrémité étant couplée à la source lumineuse 51 par des moyens de connexion 52 connus dans l'état de la technique. On règle alors la mise au point et la position de l'objectif de microscope 43 de façon à observer sur l'écran 53 du récepteur 47, l'image de l'extrémité active 54 du coeur 5 (figure 1) de la fibre optique 2. En faisant alors tourner, manuellement par exemple, l'embout 3 dans son Vé d'appui 42 (figure 2), l'extrémité active 54 du coeur de la fibre optique décrit un cercle 55 centré sur l'axe 10 de l'embout 3, cercle que l'on peut observer aisément sur l'écran 53 du récepteur 47, en utilisant par exemple un grandissement global de l'ordre de 1 000 pour le système objectif-caméra-récepteur, ce qui peut être obtenu à l'aide d'un objectif de grandissement 50 et d'un ensemble caméra-récepteur de grandissement 20. On agit sur les vis de réglage 14 (figure 1) jusqu'à rendre nul le rayon du cercle 55, ou du moins à le rendre inférieur à une valeur donnée par exemple de l'ordre de 1 à 2 microns, l'extrémité active du cœur se trouvant alors dans une position 56 où elle tourne sensiblement sur elle-même lorsque l'on fait tourner l'embout 3 sur son Vé d'appui 42. Dans ce cas, on est sûr que l'extrémité de connexion 12 du cœur coïncide avec l'axe 10 de l'embout 3. Pour faciliter le processus de mise en coïncidence que l'on vient d'expliquer, on peut s'arranger pour que l'axe optique de l'objectif de microscope 43 coïncide avec l'axe 10 de l'embout 3.

Pour éviter que la fibre optique ne se brise lorsqu'une partie de la gaine intérieure 7 est tirée hors de la gaine extérieure 8 afin de positionner l'embout 3 dans son Vé d'appui 42, on peut passer sur cette gaine intérieure 7 une gaine de renfort 57, avant de coller la fibre optique dans le tube rigide 13 (figure 1). Du fait du jeu qui existe entre la gaine intérieure 7 et la gaine extérieure 8, la gaine de renfort 57 peut rentrer à l'intérieur de la gaine extérieure 8 en même temps que la gaine intérieure 7, lorsqu'on repousse cette dernière à l'intérieur de la gaine extérieure 8, après avoir sorti l'embout de son Vé d'appui 42.

Une fois réalisée la mise en coïncidence de l'extrémité de connexion 12 du cœur avec l'axe 10 de l'embout 3, on colle le tube rigide 13 dans cet embout 3, par exemple à l'aide d'une colle dentaire que l'on infiltre, par l'avant de l'embout 3, dans l'espace 58 (figure 1) existant entre ce dernier et le tube rigide 13. (L'embout 3 est bien entendu choisi de façon à avoir un diamètre intérieur supérieur au diamètre extérieur du tube rigide 13).

On pratique ensuite un polissage dit « intermédiaire » de l'extrémité active 39 de l'embout, de l'extrémité active 36 de la fibre et de l'extrémité 37 du tube rigide, de manière que l'ensemble constitué par ces extrémités 36, 37 et 39, ensemble que l'on peut appeler « extrémité active du connecteur optique » et qui porte la référence 59 sur la figure 1, forme une surface plane et perpendiculaire à l'axe 10 de l'embout 3. Pour effectuer le polissage intermédiaire, l'extrémité active 59 du connecteur est d'abord rodée sur un papier abrasif à grains fins puis polie sur un tissu sur la surface duquel on a projeté des grains de diamant dont la taille est de l'ordre de 1 micron par exemple. On peut pratiquer le polissage intermédiaire en s'aidant d'un outil de polissage constitué par exemple par un cylindre percé d'un trou dans lequel est introduit l'embout 3, cylindre que l'on déplace alors à la surface du papier abrasif puis à la surface du tissu.

On vérifie ensuite que le cœur de la fibre optique est resté centré, c'est-à-dire en coïncidence avec l'axe 10 de l'embout 3, au cours des opérations de collage du tube rigide dans l'embout et de polissage intermédiaire, en utilisant à nouveau l'installation de contrôle représentée sur la figure 2. On peut accepter les connecteurs optiques dont les cœurs sont excentrés de 3 microns au maximum. Les connecteurs dont les coeurs sont excentrés de plus de 3 microns sont considérés comme défectueux car ils entraînent des pertes d'insertion pouvant dépasser 1 dB.

Après avoir contrôlé le centrage du cœur, on colle l'embout 3 dans le porte-embout 18, à l'aide d'une colle dentaire par exemple. On colle ensuite l'ensemble mécanique de connexion 4 sur la gaine extérieure 8, après avoir eu soin de retourner l'extrémité 38 des porteurs 9 comme on l'a représenté sur la figure 1, et avoir enduit de colle le pourtour de l'extrémité de la gaine extérieure 8. On peut à cet effet utiliser une colle rapide du genre de celles qui sont commercialement disponibles sous la marque ARADILTE. Bien entendu, on prend garde de ne pas coller le porte-embout 18 sur la rondelle 23 de façon que l'embout 3 puisse effectivement se déplacer en translation par rapport au boîtier 19.

On effectue alors un polissage dit « final » de l'extrémité active 59 de connecteur, sur le tissu à la surface duquel on a projeté des grains de diamant, jusqu'à ce que l'on obtienne un poli glacé de ladite extrémité active 59 du connecteur. On vérifie ensuite que la perte d'insertion de ce connecteur optique est effectivement inférieure à 1 dB. Enfin, on rétracte la gaine thermo-rétractable 22 de façon qu'elle emprisonne l'extrémité correspondante de l'embout 17 de gaine. Lorsque le connecteur optique ainsi obtenu n'est pas utilisé, on protège l'embout en disposant celui-ci dans un cache (non représenté) adapté audit embout.

Lorsque le jeu entre la gaine intérieure 7 et la gaine extérieure 8 est trop faible, voire nul, ce qui empêche la sortie d'une partie de la gaine intérieure 7 hors de la gaine extérieure 8, on réalise successivement les opérations suivantes pour réaliser le connecteur optique selon l'invention :

on dénude la gaine extérieure 8 puis la gaine intérieure 7 ; on colle le tube rigide 13 ; on réalise le pré-polissage ; on passe la gaine thermorétractable 22 sur la gaine extérieure 8 ; on met en place l'ensemble mécanique de connexion 4 ; on colle ce dernier sur la gaine extérieure 8 ; on colle l'embout 3 dans le porte-embout 18 en veillant à ce que l'extrémité du tube rigide affleure à l'extrémité active de l'embout ; on réalise ensuite le centrage du coeur après avoir mis en place l'embout dans son Vé d'appui 42 (figure 2), en faisant tourner cet embout, l'ensemble mécanique de connexion ainsi que la gaine extérieure ; puis on colle le tube rigide dans l'embout, on effectue ledit polissage intermédiaire, le contrôle du centrage, le polissage dit « final », le contrôle de la perte d'insertion et enfin on rétracte la gaine thermo-rétractable 22.

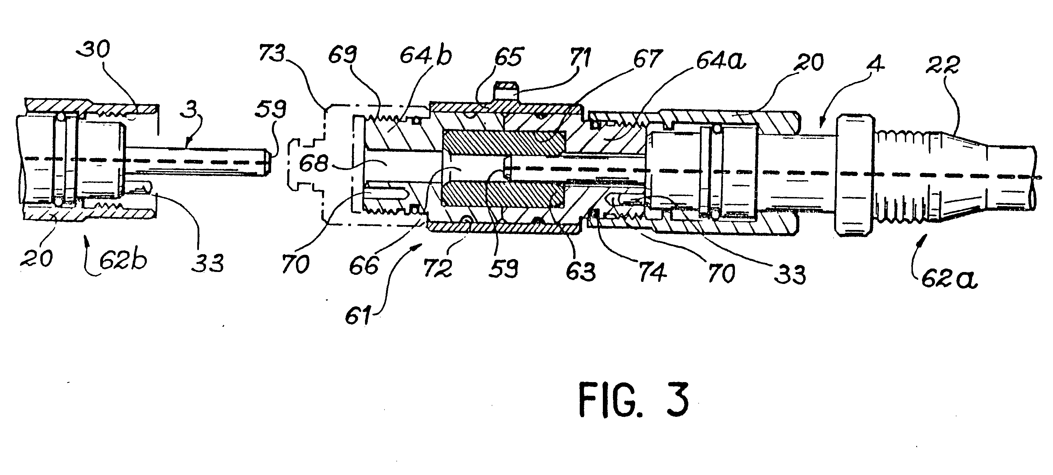

Sur la figure 3, on a représenté schématiquement un mode de réalisation particulier de moyens 61 de raccord permettant d'obtenir une connexion optique monovoie selon l'invention. Cette connexion monovoie comprend, outre les moyens de raccord 61, deux connecteurs optiques identiques 62a et 62b conformes au connecteur représenté sur la figure 1. Le connecteur 62a est représenté monté sur les moyens de raccord et le connecteur 62b est représenté en coupe, non monté sur ces moyens de raccord.

Les moyens 61 de raccord comprennent un noyau de centrage 63, deux corps d'accrochage 64a et 64b, et un tube extérieur 65. Le noyau de centrage 63 comporte un trou calibré, apte à emprisonner les embouts 3 des connecteurs optiques 62a et 62b. A titre indicatif et non limitatif, le noyau central 63 est réalisé en bronze et le trou 66

a un diamètre de $3^{+\ 0,002}_{+\ 0,001}$ mm, pour des

embouts dont le diamètre vaut $3^{+\ 0}_{-\ 0,001}$ mm.

Les deux extrémités du trou 66 sont chanfreinées et les extrémités des embouts 3 ont également un chanfrein 60 (figure 1) à leur périphérie, pour faciliter l'introduction des embouts 3 dans le trou 66. Par ailleurs, pour des questions de simplicité de fabrication, le noyau central 63 épouse la forme d'un cylindre coaxial au trou 66.

Chaque corps d'accrochage 64a ou 64b comporte d'une part un logement 67 apte à s'emboîter sur le noyau de centrage 63, c'est-à-dire de forme cylindrique dans l'exemple choisi, et débouchant d'un côté dudit corps d'accrochage 64a ou 64b, et d'autre part un trou 68 de diamètre supérieur à celui des embouts, coaxial audit logement, communiquant avec ce dernier et débouchant de l'autre côté dudit corps d'accrochage 64a ou 64b.

Le corps d'accrochage 20 du connecteur optique 62a (respectivement 62b) est destiné à être vissé grâce à son filetage 30, sur le pourtour dudit autre côté du corps d'accrochage 64a (respectivement 64b) faisant partie des moyens 61 de raccord et à cet effet, ledit pourtour comporte donc un filetage 69. Les corps d'accrochage 20 des connecteurs optiques 62a et 62b jouent donc le rôle de corps d'accrochage femelles et les corps d'accrochage 64a et 64b des moyens 61 de raccord jouent le rôle de corps d'accrochage mâles. De plus, chaque corps d'accrochage mâle 64a ou 64b comporte une cavité 70 adaptée au téton 33 du connecteur optique 62a ou 62b correspondant, de façon à obtenir un mode d'accrochage unique entre les corps d'accrochage mâles et les corps d'accrochage femelles. Enfin, les trous 68 des corps d'accrochage mâles 64a et 64b sont chanfreinés pour faciliter l'introduction des embouts 3 dans ces trous 68.

Le tube extérieur 65 est prévu pour emprisonner les corps d'accrochage mâles 64a et 64b et peut comporter un plot 71 permettant d'attacher les moyens 61 de raccord à un support non représenté.

Le montage des moyens 61 de raccord est effectué de la façon suivante : l'un des deux corps d'accrochage mâle 64a ou 64b est emmanché et collé dans le tube extérieur 65. (Le pourtour de chaque corps d'accrochage mâle 64a ou 64b entourant le logement 67 destiné à recevoir le noyau de centrage 63, comporte une gorge annulaire 72 destinée à recevoir la colle). On place ensuite le noyau de centrage 63 dans le logement 67 dudit corps d'accrochage mâle 64a ou 64b. Enfin, on emmanche et on colle l'autre corps d'accrochage mâle 64b ou 64a dans le tube extérieur 65 de façon que les logements 67 soient en regard l'un de l'autre, emprisonnant ainsi le noyau de centrage 63. On précise que les dimensions de celui-ci sont telles qu'il soit flottant dans lesdits logements. On peut prévoir des caches de protection 73, dont un seul est représenté sur la figure 3, pour recouvrir chacune desdites autres extrémités des corps d'accrochage mâles 64a et 64b.

Pour réaliser la connexion monovoie, on enlève bien entendu ces caches et on fait pénétrer l'embout 3 du connecteur optique 62a (respectivement 62b) dans le trou 68 du corps d'accrochage mâle 64a (respectivement 64b) puis dans le trou 66 du noyau de centrage 63 et l'on visse le corps d'accrochage femelle 20 sur le corps d'accrochage mâle 64a (respectivement 64b) correspondant. (Chaque corps d'accrochage femelle est pourvu d'une butée de façon que le boîtier 19 (figure 1) soit serré contre le corps d'accrochage mâle lors du vissage en question). Les dimensions des moyens 63 de raccord sont prévues pour que les extrémités actives 59 des deux embouts 3, qui sont perpendiculaires aux axes desdits embouts, viennent en contact l'une avec l'autre de façon à limiter les pertes d'insertion. Enfin, on peut prévoir sur le pourtour dudit autre côté de chacun des corps d'accrochage mâles, un joint 74 permettant d'assurer l'étanchéité du raccord entre les corps d'accrochage mâles et femelles.

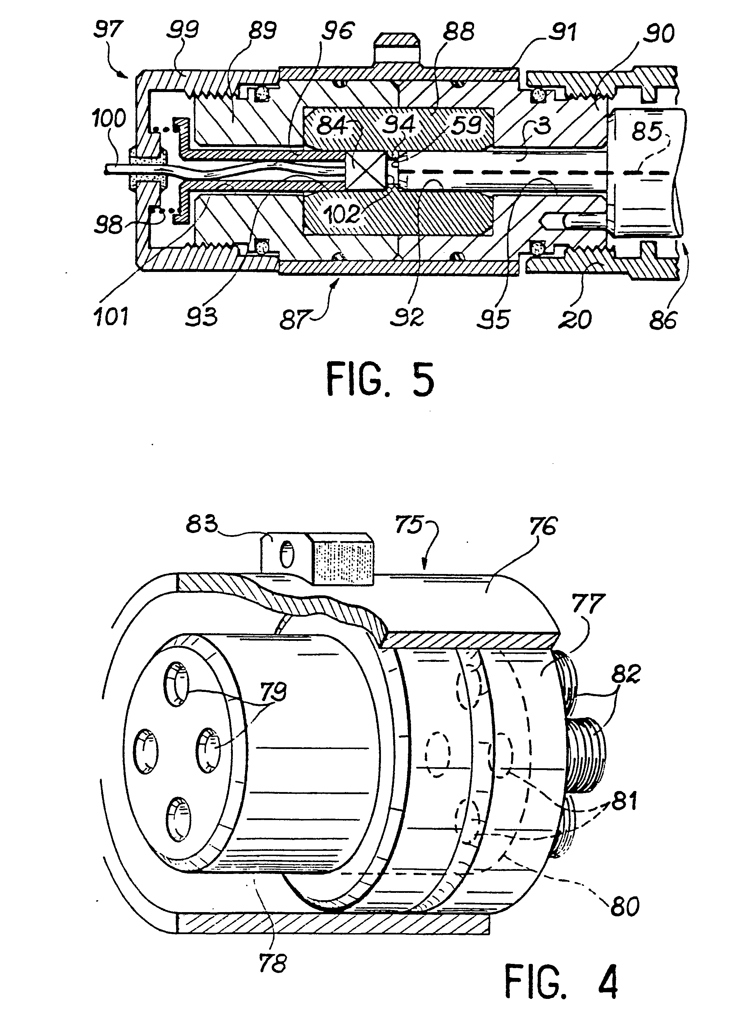

Sur la figure 4, on a représenté schématiquement un mode de réalisation particulier de moyens 75 de raccord permettant d'obtenir, selon l'invention, une connexion multivoie entre des fibres optiques, c'est-à-dire de réaliser une connexion biunivoque entre N fibres optiques et N autres fibres optiques. Sur la figure 4, le nombre N est égal à quatre.

Les moyens 75 de raccord, constituent une généralisation des moyens de raccord 61 représentés sur la figure 3. Ces moyens 75 de raccord, destinés à une connexion multivoie, comportent un tube extérieur 76, deux corps d'accrochage identiques 77 (dont un seul est représenté sur la figure 4) et un noyau de centrage 78.

On réalise par exemple la connexion multivoie en utilisant huit connecteurs identiques non représentés, conformes au connecteur représenté sur la figure 1, de façon à former un premier groupe de quatre connecteurs et un second groupe de quatre connecteurs que l'on souhaite associer de façon biunivoque dans ladite connexion multivoie.

Le noyau de centrage 78 comporte alors quatre trous 79 identiques, parallèles et calibrés, prévus pour l'introduction des embouts des connecteurs. Chaque corps d'accrochage 77 comporte :

un logement 80 prévu pour un montage flottant du noyau de centrage 78, et

quatre trous 81 parallèles, coaxiaux audit logement, débouchant dans celui-ci, prévus pour être coaxiaux aux trous 79 du noyau de centrage lorsque ce dernier est monté dans ledit logement 80, et destinés à l'introduction des embouts des connecteurs.

Les pourtours des parties 82 de chacun des corps d'accrochage 77, parties qui contiennent respectivement les trous 81, sont filetés de façon que l'on puisse visser respectivement sur ces pourtours les corps d'accrochage femelles 230 (figure 1) des connecteurs, de façon à réaliser ladite connexion multivoie. (Les corps d'accrochage 77 jouent donc le rôle de corps d'accrochage mâles).

Le montage des moyens de raccord pour connexion multivoie est effectué de la même façon que le montage des moyens de raccord pour connexion monovoie, expliqué en référence à la figure 3 : l'un des corps d'accrochage mâles 77 est emmanché et collé dans le tube extérieur 76 prévu à cet effet. Le noyau de centrage 78 est ensuite monté dans le logement 80 dudit corps d'accrochage mâle, avec une orientation permettant la coaxialité des trous 79 et 81, puis l'autre corps d'accrochage mâle est emmanché et collé dans le tube extérieur 76 de façon que ses trous 81 soient coaxiaux aux trous 79 et que les logements 80 se trouvent en regard l'un de l'autre, le noyau de centrage 78 étant ainsi emprisonné dans lesdits logements. On peut alors introduire les embouts des connecteurs dans les trous 81 des corps d'accrochage mâles puis dans les trous 79 du noyau de centrage 78 qui leur sont associés, les dimensions des moyens 75 de raccord étant déterminées pour que les embouts des connecteurs optiques à apparier viennent au contact l'un de l'autre pour limiter les pertes d'insertion. On achève alors la connexion multivoie en vissant les corps d'accrochage femelles respectivement sur lesdits pourtours filetés des corps d'accrochage mâles, qui leur sont associés. Sur la figure 4, on voit également un plot 83 permettant d'attacher le tube extérieur 76 à un support non représenté.

Sur la figure 5, on a représenté schématiquement un mode de réalisation particulier d'une connexion conforme à la présente invention, entre une diode 84 et la fibre optique 85 d'un connecteur optique 86 conforme à celui qui est représenté sur la figure 1. La diode 84 est par exemple une diode électroluminescente ou une diode laser et on cherche à injecter la lumière que celle-ci émet dans la fibre optique 85. Bien entendu, ce pourrait être une diode réceptrice, par exemple du type PIN, prévue pour capter la lumière émise par la fibre optique 85.

Ladite connexion comprend des moyens de raccord 87 qui comportent un noyau de centrage 88, un corps d'accrochage 89, associé à la diode 84, un autre corps d'accrochage 90, associé au connecteur 86, et un tube extérieur 91. Les moyens de raccord 87 entre la diode 84 et la fibre optique 85 sont réalisés et montés de la même façon que les moyens de raccord 61 représentés sur la figure 3. Seuls les noyaux de centrage présentent une légère différence : le noyau de centrage 88 est pourvu de deux logements coaxiaux 92 et 93 débouchant sur l'extérieur du noyau de centrage, disposés en regard l'un de l'autre et communiquant l'un avec l'autre. L'un 92 des deux logements est calibré et prévu pour recevoir l'embout 3 du connecteur 86. L'autre logement 93 est apte à recevoir la diode 84. Un épaulement annulaire 94 sépare les deux logements 92 et 93, de façon à éviter tout contact entre la diode et l'embout 3 du connecteur et donc à empêcher la détérioration de l'extrémité active 59 du connecteur et de l'extrémité active de la diode 84. On réalise la connexion de la façon suivante : l'embout 3 est introduit dans son logement 92 après avoir traversé un logement 95 coaxial, pratiqué dans le corps d'accrochage 90. L'extrémité active 59 du connecteur vient en contact, par sa périphérie (de façon à ne pas endommager l'extrémité active de la fibre optique), avec l'épaulement 94. On immobilise le connecteur par rapport aux moyens de raccord 87 en vissant le corps d'accrochage femelle 20 sur le corps d'accrochage 90 prévu pour jouer le rôle de corps d'accrochage mâle et fileté sur le pourtour de son extrémité qui contient ledit logement 95.

La diode électroluminescente 84 est par exemple en présentation dite « barreau ». Elle est montée à l'extrémité d'un barreau 96 creux, rendu solidaire d'une embase 97 par l'intermédiaire d'un ressort de rappel 98. L'embase 97 est pourvue d'un corps d'accrochage femelle 99 adapté au corps d'accrochage 89 associé à la diode. Des conducteurs gainés 100 prévus pour l'alimentation de la diode 84 en courant électrique, traversent le barreau creux 96 puis l'embase 97. La diode est alors introduite dans un logement 101 pratiqué dans le corps d'accrochage 89 associé à la diode, puis dans le logement 93 prévu pour la diode dans le noyau de centrage 88, la périphérie de l'extrémité active 102 de la diode venant alors en contact avec l'épaulement 94. Le corps d'accrochage femelle 99 dont est pourvue l'embase 97 de la diode est alors vissé sur le corps d'accrochage 89 associé à cette diode, jouant le rôle de corps d'accrochage mâle et fileté sur le pourtour de son extrémité qui contient ledit logement 101. Bien entendu on peut interposer entre la diode et la fibre optique, une optique de liaison (non représentée), destinée à focaliser la lumière issue de la diode sur l'extrémité active de la fibre optique, cette optique étant par exemple montée sur l'épaulement 94.

On pourrait bien entendu réaliser une connexion biunivoque entre N diodes et N fibres optiques de connecteurs optiques conformes à celui qui est représenté sur la figure 1, en utilisant des moyens de raccord comparables aux moyens de raccord de la figure 4, le noyau de centrage étant alors pourvu de N paires de logements coaxiaux, en regard l'un de l'autre, séparés par un épaulement et respectivement prévus pour recevoir une diode et un embout de connecteur, comme on l'a expliqué à propos de la figure 5.

Les moyens de raccord que l'on a considérés dans la description des figures 3, 4 et 5 peuvent être libres ou bien liés à une face d'un appareil, en constituant alors une traversée de panneau.

Les connexions optiques fibres-fibres ou diodes-fibres réalisées avec la présente invention, permettent d'obtenir des pertes d'insertion au plus égales à 0,8 dB pour la connexion de fibres optiques à gradient d'indice ayant un coeur de 50 microns de diamètre. En outre, de telles connexions, placées en milieu liquide, sont avantageusement capables de demeurer étanches lorsqu'elles sont soumises à une pression pouvant aller jusqu'à 0,2 Kg/cm², de la part du liquide. Enfin, la manipulation des connecteurs optiques réalisés selon l'invention ne nécessite aucune précaution exagérée et ces connecteurs demeurent fiables lorsqu'ils sont placés dans de sévères conditions climatiques, notamment de température et d'humidité.

## Revendications

1. Procédé de fabrication d'un connecteur optique, ce connecteur comprenant :
une fibre optique (2) pourvue d'un cœur,
un embout (3) qui est destiné à contenir l'extrémité de connexion (11) de la fibre (2) et dont la surface externe épouse la forme d'un cylindre de révolution ayant ainsi un axe de symétrie (10), et
un ensemble mécanique de connexion (4),
ce procédé consistant :
à mettre en coïncidence l'extrémité de connexion (12) du cœur (5) de la fibre optique (2) avec ledit axe de symétrie (10) du cylindre, en contrôlant optiquement cette mise en coïncidence, puis
à immobiliser l'extrémité de connexion (12) du coeur par rapport a l'embout (3),

à polir les extrémités actives (36, 39) de l'embout et de la fibre, et à rendre solidaires l'un de l'autre l'embout (3) et l'ensemble mécanique de connexion (4), ce dernier ayant préalablement été mis en place,

procédé caractérisé en ce que l'embout (3) est muni de moyens (14) de déplacement et d'immobilisation de l'extrémité de connexion (11) de la fibre optique (2) à l'intérieur dudit embout (3) et en ce que la mise en coïncidence est effectuée en disposant l'embout (3) dans un Vé d'appui (42), en injectant de la lumière dans le cœur (5) de la fibre optique (2) par l'autre extrémité de celle-ci tout en faisant tourner l'embout (3) dans le Vé d'appui (42), l'extrémité active (12) du coeur (5) de la fibre optique (2) décrivant alors un cercle (55) centré sur l'axe (10) du cylindre, et en déplaçant l'extrémité de la connexion (11) de la fibre optique (2) à l'intérieur de l'embout (3), jusqu'à annuler le rayon dudit cercle (55).

2. Procédé selon la revendication 1, caractérisé en ce que l'extrémité de connexion (11) de la fibre optique (2) est immobilisée dans un tube rigide de protection (13) avant d'être introduite dans l'embout (3) et en ce que le déplacement et l'immobilisation de ladite extrémité de connexion (11) de la fibre optique (2) dans l'embout (3) sont effectués par l'intermédiaire du tube rigide de protection (13).

3. Procédé selon la revendication 2, caractérisé en ce que les moyens (14) de déplacement et d'immobilisation sont des vis de réglage aptes à serrer ce tube rigide de protection (13) suivant un pourtour de celui-ci.

4. Procédé d'obtention d'une connexion biunivoque entre N fibres optiques et N autres fibres optiques, N étant un nombre entier au moins égal à un, ladite connexion comprenant un premier groupe de N connecteurs optiques, un second groupe de N connecteurs optiques et des moyens (61, 75) de raccord deux à deux des connecteurs du premier groupe aux connecteurs du second groupe, de façon à former N paires de connecteurs, procédé caractérisé en ce que l'on fabrique les connecteurs conformément au procédé selon l'une quelconque des revendications 1 à 3 et de telle manière que pour chaque paire, les embouts (3) des deux connecteurs appariés soient identiques et aient des extrémités actives complémentaires l'une de l'autre, et en ce que les moyens (61, 75) de raccord comportent un noyau de centrage (63, 78) pourvu de N trous calibrés (66, 79), chaque trou calibré étant ajusté aux embouts (3) des deux connecteurs de l'une desdites paires et recevant ces embouts, ces derniers étant disposés dans ledit trou calibré de façon que leurs extrémités actives soient au contact l'une de l'autre, afin de pouvoir faire passer de la lumière d'un connecteur à l'autre.

5. Procédé d'obtention d'une connexion entre au moins une diode (84) et au moins une fibre optique (85), ladite connexion comprenant au moins un connecteur optique (86) et des moyens (87) de raccord de la diode (84) et du connecteur (86), procédé caractérisé en ce que l'on fabrique le connecteur conformément au procédé selon l'une quelconque des revendications 1 à 3 et en ce que les moyens (87) de raccord de la diode et du connecteur comportent un noyau de centrage (88) pourvu d'au moins une paire de logements coaxiaux (92, 93) débouchant sur l'extérieur du noyau de centrage (88), disposés en regard l'un de l'autre et communiquant l'un avec l'autre, l'un (92) des deux logements étant calibré et recevant l'embout (3) du connecteur (86), l'autre logement (93) recevant la diode (84), l'embout (3) et la diode (84) étant disposés dans leurs logements respectifs (92, 93) de façon que leurs extrémités actives (59, 102) soient en regard l'une de l'autre, afin de pouvoir réaliser un échange de lumière entre la diode (84) et la fibre optique (85) du connecteur (86).

**Claims**

1. Process for the production of an optical connector, which incorporates an optical fibre (2) provided with a core (5), a termination (3) serving to contain the connection end (11) of the fibre (2) and whose outer surface adopts the shape of a cylinder of revolution, thus having an axis of symmetry (10), and a mechanical connection assembly (4), the process bringing about the coincidence between the connection end (12) of the optical fibre core (5) and said axis of symmetry (10) of the cylinder, whilst optically controlling the bringing about of coincidence, followed by the fixing of the core (5) connection end (12) relative to the termination (3) and polishing the active ends (36, 39) of the termination (3) and the fibre and joining together the termination and the mechanical connection assembly (4), the latter having previously been fitted, characterized in that the termination (3) is provided with means (14) for displacing and fixing the optical fibre connection end (11) within the said termination (3) and in that the bringing about of coincidence is obtained by placing the termination (3) in a bearing vee (42) by injecting light into the optical fibre core (5) by the other end thereof, whilst rotating the termination in the bearing vee (42), the active end (12) of the optical fibre core (5) then describing a circle (55) centered on the axis (10) of the cylinder, and by displacing the optical fibre connection end (11) within the termination (3), until the radius of said circle (55) is cancelled out.

2. Process according to claim 1, characterized in that the connection end (11) of optical fibre (2) is fixed in a rigid protective tube (3) before being introduced into termination (3) and in that the displacement and fixing of said connection end (11) of optical fibre (2) in termination (3) are carried out by means of the rigid protective tube (13).

3. Process according to claim 2, characterized in that the displacement and fixing means (14) are adjustment screws able to secure the rigid protective tube (13) along a circumference thereof.

4. Process for obtaining a biunivocal connection between N optical fibres and N other optical fibres, N being an integer at least equal to one, said connection incorporating a first group of N optical fibres, a second group of N optical fibres and means (61, 75) for the pairwise connection of the connectors of the first group with the connectors of the second group so as to form N pairs of connectors, characterized in that the connectors are produced according to the process of any one of the claims 1 to 3 and so that for each pair the terminations (3) of two paired conductors are identical and have active ends which are complementary to one another and in that the connecting means (61, 75) comprise a centering core (63, 78) provided with N calibrating holes (66, 79), each calibrated hole being able to receive the terminations (3) of two connectors of one of said pairs and being adjusted to said terminations, the latter being positioned in the calibrated hole in such a way that their active ends are in contact with one another, so as to be able to pass light from one connector to the next.

5. Process for obtaining a connection between at least one diode (84) and at least one optical fibre (85), said connection incorporating at least one optical connector (86) and means (87) for connecting the diode (84) and the connector (86), characterized in that the connector is produced according to the process of any one of the claims 1 to 3 and in that the means (87) for connecting the diode to the connector comprise a centering core (88) provided with at least one pair of coaxial recesses (92, 93) issuing into the outside of the centering core (88), arranged facing one another and communicating with one another, one of the two recesses (92) being calibrated and able to receive the connector termination (3), the other recess (93) being able to receive the diode (84), the termination (3) and the diode (84) being disposed in their respective recesses (92, 93) in such a way that their active ends (59, 102) face one another, so as to be able to obtain a light exchange between the diode (84) and the optical fibre (85) of the connector (86).

**Patentansprüche**

1. Verfahren zum Herstellen eines optischen Verbinders, wobei der Verbinder enthält :
eine optische Faser (2), die mit einem Kern versehen ist,
einen Schuh (3), der zur Aufnahme des Anschlußendes (11) der Faser (2) bestimmt ist und dessen Außenfläche die Form eines Drehzylinders und somit eine Symmetrieachse (10) hat, und
eine mechanische Verbindungseinrichtung (4), das Verfahren enthaltend :
in Übereinstimmung bringen des Anschlußendes (12) des Kerns (5) der optischen Faser (2) mit der Symmetrieachse (10) des Zylinders, wobei dieses in Übereinstimmung bringen optisch überprüft wird, anschließend
Festlegen des Anschlußendes (12) des Kerns in bezug auf den Schuh (3),
Polieren der aktiven Enden (36, 39) des Schuhs und der Faser und festes Verbinden des Schuhs (3) und der mechanischen Verbindungseinrichtung (4) miteinander, wobei letztere zuvor in Stellung gebracht worden ist,
dadurch gekennzeichnet, daß der Schuh (3) mit einer Einrichtung (14) zur Verstellung und zur Festlegung des Anschlußendes (11) der optischen Faser (2) im Innern des Schuhs (3) versehen ist und daß das In Übereinstimmung bringen dadurch ausgeführt wird, daß der Schuh (3) in einem Halteprisma (42) angebracht wird, daß Licht in den Kern (5) der optischen Faser (2) durch das andere Ende derselben eingestrahlt wird, wobei man den Schuh (3) in dem Halteprisma (42) rotieren läßt, so daß das aktive Ende (12) des Kerns (5) der optischen Faser (2) einen Kreis (55) beschreibt, der in der Achse (10) des Zylinders zentriert ist, und daß man das Anschlußende (11) der optischen Faser (2) im Innern des Schuhs (3) verstellt, bis der Radius des genannten Kreises (55) zu Null gemacht ist.

2. Verfahren nach Anspruch 1, dadurch gekennzeichnet, daß das Anschlußende (11) der optischen Faser (2) in einem steifen Schutzrohr (13) festgelegt ist, bevor es in den schuh (3) eingeführt wird, und daß man die Verstellung und Festlegung des genannten Anschlußendes (11) der optischen Faser (2) in dem Schuh (3) mittels des steifen Schutzrohres (13) ausführt.

3. Verfahren nach Anspruch 2, dadurch gekennzeichnet, daß die Einrichtung (14) zum Verstellen und Festlegen Einstellschrauben sind, die dazu eingerichtet sind, das steife Schutzrohr (13) durch Anlage an dessen Umfang festzuspannen.

4. Verfahren zum Erzielen einer eineindeutigen Verbindung zwischen N optischen Fasern und N anderen optischen Fasern, wobei N eine ganze Zahl wenigstens gleich 1 ist, die Verbindung enthaltend eine erste Gruppe aus N optischen Verbindern, eine zweite Gruppe aus N optischen Verbindern und paarige Verbindungseinrichtungen (61, 75) für die Verbinder der ersten Gruppe mit den Verbindern der zweiten Gruppe derart, daß N Verbinderpaare gebildet werden, dadurch gekennzeichnet, daß man die Verbinder nach einem Verfahren gemäß einem der Ansprüche 1 bis 3 und derart herstellt, daß für jedes Paar die Schuhe (3) der zwei gepaarten Verbinder identisch sind und zueinander komplementäre aktive Enden haben, und daß die Verbindungseinrichtungen (61, 75) einen Zentrierkern (63, 78) aufweisen, der mit N Kalibrierlöchern (66, 79) versehen ist, wobei jedes Kalibrierloch auf die Schuhe (3) der zwei Verbinder von einem der genannten Paare justiert ist und diese Schuhe aufnimmt, wobei letztere in dem Kalibrierloch derart angeordnet sind, daß ihre aktiven Enden miteinander in Berührung sind, um das Licht von einem Verbinder zum anderen gelangen zu lassen.

5. Verfahren zum Erzielen einer Verbindung zwischen wenigstens einer Diode (84) und wenigstens einer optischen Faser (85), wobei die Verbindung wenigstens einen optischen Verbinder (86) und Einrichtungen (87) zum Verbinden der Diode (84) mit dem Verbinder (86) aufweist, dadurch gekennzeichnet, daß man den Verbinder nach einem Verfahren nach einem der Ansprüche 1 bis 3 herstellt, und daß die Einrichtung (87) zum Verbinder der Diode mit dem Verbinder einen Zentrierkern (88) enthält, der mit wenigstens einem Paar koaxialer Aufnahmen (92, 93) versehen ist, die an der Außenseite des Zentrierkerns (88) einander gegenüberstehend enden und miteinander in Verbindung sind, wobei die eine (92) der zwei Aufnahmen kalibriert ist und den Schuh (3) des Verbinders (86) aufnimmt, die andere Aufnahme (93) die Diode (84) aufnimmt, der Schuh (3) und die Diode (84) in ihren entsprechenden Aufnahmen (92, 93) derart angeordnet sind, daß ihre aktiven Enden (59, 102) einander gegenüberstehen, um einen Lichtaustausch zwischen der Diode (84) und der optischen Faser (85) des Verbinders (86) herstellen zu können.

FIG. 1

FIG. 2

FIG. 3

FIG. 5

FIG. 4